(19) **Europäisches Patentamt / European Patent Office / Office européen des brevets**

(11) **EP 1 995 565 B1**

(12) **FASCICULE DE BREVET EUROPEEN**

(45) Date de publication et mention de la délivrance du brevet:
**13.11.2013 Bulletin 2013/46**

(51) Int Cl.:
***G01D 3/032*** *(2006.01)*

(21) Numéro de dépôt: **08156662.2**

(22) Date de dépôt: **21.05.2008**

(54) **Dispositif de traitement de signal de systemes en configuration differentielle**

Vorrichtung zur Verarbeitung von Signalen von Systemen in Differentialkonfiguration

Device for processing signals from systems with differential configuration

(84) Etats contractants désignés:
**DE GB**

(30) Priorité: **25.05.2007 FR 0703734**

(43) Date de publication de la demande:
**26.11.2008 Bulletin 2008/48**

(73) Titulaire: **Thales**
**92200 Neuilly Sur Seine (FR)**

(72) Inventeurs:
• **Legoll, Sébastien**
**26500, BOURG LES VALENCE (FR)**
• **Guillard, Patrice**
**26000, VALENCE (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-94/24573**

• **REGTIEN P P L ET AL: "Measurement Science for Engineers" 2004, BUTTERWORTH-HEINEMANN , XP002463195 * section 3.6, introduction * * page 79, dernier paragraphe - page 81, premier paragraphe * * figures 3.16 et 3.17 ***
• **BENTLEY D J P: "Principles of Measurements Systems (Fourth Edition)" 2004, PRENTICE HALL , XP002463196 * page 42 ; figure 3.5(b) ***
• **MORRIS A S: "Measurement and Instrumentation Principles" 2001, BUTTERWORTH-HEINEMANN , XP002463197 * section 3.3.2 ; figure 3.2 ***

**Description**

Le domaine de l'invention est celui du traitement du signal de systèmes disposés en configuration différentielle. On entend par configuration différentielle une configuration où deux systèmes permettent de générer simultanément une variable représentant un paramètre et son opposé.

Cette configuration permet de s'affranchir ou de diminuer de façon importante certaines erreurs. Ce procédé est tout particulièrement adapté pour traiter des signaux issus de capteurs de mesure où la mesure peut être à la fois entachée de bruit et être soumise à des effets parasites comme les dérives thermiques. La correction des dérives thermiques est, en effet, un problème majeur des systèmes de mesure. Ceci est décrit, par exemple, dans le livre "Measurement Science for Engineers" de P.P.L. Regtien et al, Butterworth-Heinemann, 2004, section 3.6. Il existe de nombreux principes physiques où il est aisé d'obtenir une variable, un signal de sortie et son opposé. On citera notamment les dispositifs mécaniques résonnants, certains dispositifs optiques, des dispositifs électriques ou électroniques,....Pour donner un exemple simple, si l'on mesure les déplacements d'un objet qui peut être une plaque, une poutre, une membrane, on obtient un déplacement de +d d'un premier côté de cet objet et de -d de l'autre côté.

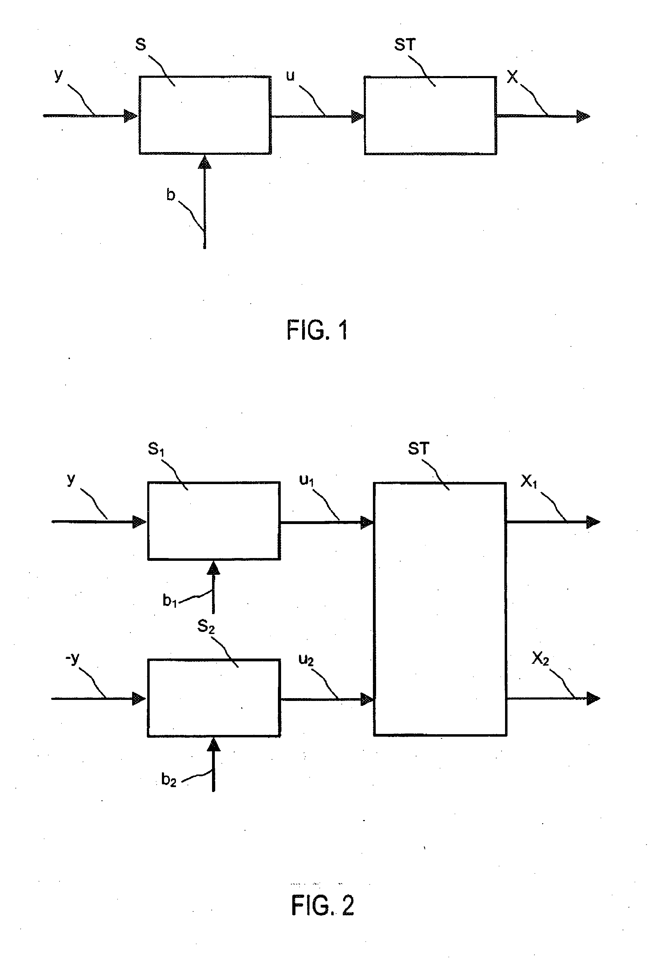

Le cas général où un seul système traite l'information est exposé en figure 1. Le système S reçoit comme entrée le signal y à analyser. S renvoie le signal de sortie u qui est modulé par l'entrée y. S reçoit également des termes de bruit b qui constituent des termes parasites au niveau de la sortie u. Un traitement ST permet de démoduler u afin d'obtenir un signal X variant suivant une fonction polynomiale avec y, cette loi de variation étant obtenue de manière exacte ou approchée.

On peut ainsi poser :

$X = X_0 f(y)$ avec $f(y)$ polynôme valant 1 pour $y=0$, $X_0$ constituant la sortie du traitement au repos, c'est-à-dire pour un signal d'entrée nul.

Afin de déterminer y à partir de X, il est nécessaire de connaître $X_0$ ainsi que les coefficients de f. Ces paramètres sont reliés aux grandeurs physiques caractéristiques de S et peuvent être connus par calibration mais ils peuvent varier en fonction, par exemple, de la température.

Si on se contente, pour déterminer y à partir de X, d'utiliser pour $X_0$ et les coefficients de f les valeurs numériques déterminées lors de la calibration qui s'est faite à une température pouvant être différente de la température effective du système au moment où celui-ci renvoie l'information X, on commet une erreur au niveau de l'estimation de y qui peut être incompatible avec le degré de précision exigée. Classiquement, cette erreur peut se décomposer en deux termes :

- Une erreur de biais qui correspond à l'erreur d'estimation de y pour une entrée nulle ;
- une erreur de facteur d'échelle variant en fonction de la valeur de l'entrée.

De plus, le bruit présent au niveau du système S entraîne un bruit au niveau de l'estimation de y qui peut aussi être incompatible avec la précision requise.

Enfin, dans le cas où le traitement permettant de déterminer X à partir de u est un traitement numérique, le bruit d'horloge intervenant lors de l'échantillonnage du système va provoquer un bruit supplémentaire au niveau de X.

Le but de l'invention est de proposer une méthode basée sur l'emploi de deux systèmes en configuration différentielle qui va permettre de :

- déterminer la température du système et ainsi être capable d'estimer y à partir de X en compensant l'effet de la température sur les paramètres du système ;
- de réduire les effets des bruits comprenant les bruits d'horloge et les bruits s'ajoutant au niveau du système S.

Plus précisément, l'invention a pour objet un dispositif de mesure et de traitement de signal selon la revendication indépendante 1.

L'invention sera mieux comprise et d'autres avantages apparaîtront à la lecture de la description qui va suivre donnée à titre non limitatif et grâce aux figures annexées parmi lesquelles :

La figure 1 représente le synoptique d'un système de traitement mono-voie selon l'art antérieur ;
La figure 2 représente le synoptique d'un système de traitement différentiel selon l'invention.

Le procédé selon l'invention est basé sur l'emploi d'un système différentiel. Le traitement de signal selon l'invention met en jeu deux systèmes $S_1$ et $S_2$ qui reçoivent respectivement le signal d'entrée y et son opposé -y.

Chaque système renvoie un signal u sur une voie. On a ainsi $u_1$ sur la voie 1 et $u_2$ sur la voie 2. Un traitement ST permet de démoduler $u_1$ et $u_2$ afin d'obtenir deux signaux $X_1$ et $X_2$ variant suivant des fonctions polynomiales $f_1$ et

$f_2$ avec, en utilisant les notations précédentes :

$$\text{sur la voie 1} \quad X_1 = X_{0,1} f_1(y) = X_{0,1}[1 + f_{1,1}y + f_{2,1}y^2 + ...]$$

$$\text{sur la voie 2} \quad X_2 = X_{0,2} f_2(-y) = X_{0,2}[1 - f_{1,2}y + f_{2,2}y^2 + ...]$$

$f_{i1}$ et $f_{i2}$ étant les coefficients des fonctions polynomiales $f_1$ et $f_2$. Il est à noter qu'il est pratiquement toujours possible de décomposer une fonction sous cette forme. Les différences entre les paramètres $X_{0,1}$ et $X_{0,2}$ ainsi qu'entre les coefficients des polynômes $f_1$ et $f_2$ proviennent des disparités entre les deux systèmes, qui peuvent être volontaires pour éviter les couplages parasites ou non, provenant alors de tolérances de fabrication.

Le coeur du procédé consiste à combiner les deux relations pour obtenir deux signaux $X_3$ et $X_4$, en effectuant la somme pondérée et la différence pondérée indiquées ci-dessous :

$$\text{Relation 1} \quad X_3 = X_1 - \frac{X_{0,1}}{X_{0,2}} X_2$$

$$\text{Relation 2} \quad X_4 = X_1 + \frac{X_{0,1}}{X_{0,2}} \frac{f_{1,1}}{f_{1,2}} X_2$$

On a alors :

$$\text{Relation 3} \quad X_3 = X_1 - \frac{X_{0,1}}{X_{0,2}} X_2 = X_{0,1}(f_{1,1} + f_{1,2})y + X_{0,1}(f_{2,1} - f_{2,2})y^2 + ...$$

$$\text{Relation 4} \quad X_4 = X_1 + \frac{X_{0,1}}{X_{0,2}} \frac{f_{1,1}}{f_{1,2}} X_2 = X_{0,1}(1 + \frac{f_{1,1}}{f_{1,2}}) + X_{0,1}(f_{2,1} + \frac{f_{1,1}}{f_{1,2}} f_{2,2})y^2 + ....$$

Les rapports $\dfrac{X_{0,1}}{X_{0,2}}$ et $\dfrac{f_{1,1}}{f_{1,2}}$ peuvent être déterminés par calibration. Si $X_0$ et les coefficients de f varient en fonction d'un paramètre, comme, par exemple, la température T, alors il est possible d'écrire ces paramètres selon une loi polynomiale. On a, dans ce cas :

$$X_{0,1}(T) = X_{0,1}(T_0)[1 + \beta_1(T - T_0) + \beta_2(T - T_0)^2 + ...)$$

et

$$f_{1,1}(T) = f_{1,1}(T_0)[1 + \delta_1(T - T_0) + \delta_2(T - T_0)^2 + ...]$$

avec T température effective du système et $T_0$ température du système lors de la calibration.

Si les systèmes sont analogues, $X_{0,2}$ et $f_{1,2}$ vont varier de la même manière en fonction de la température et on peut écrire :

$$X_{0,2}(T) = X_{0,2}(T_0)[1 + \beta_1(T - T_0) + \beta_2(T - T_0)^2 . + ..)$$

$$f_{1,2}(T) = f_{1,2}(T_0)[1 + \delta_1(T - T_0) + \delta_2(T - T_0)^2 + ...]$$

Les rapports $\dfrac{X_{0,1}}{X_{0,2}}$ et $\dfrac{f_{1,1}}{f_{1,2}}$ sont donc indépendants de la température. Il suffit de les déterminer lors d'une calibration. On peut ainsi déterminer $X_3$ et $X_4$ à partir de $X_1$ et $X_2$ sans entacher ces expressions d'erreurs dues aux variations thermiques. Le calcul de $X_3$ et $X_4$ à partir de $X_1$ et $X_2$ ne pose aucun problème technique particulier et peut être réalisé par différents procédés électroniques, soit en numérique soit en analogique.

Si f est un polynôme de degré 1, ce qui représente le cas général où le signal de sortie X varie de façon linéaire avec le signal d'entrée, alors les relations 3 et 4 deviennent :

$$X_3 = X_{0,1}(f_{1,1} + f_{1,2})y$$

$$X_4 = X_{0,1}(1 + \dfrac{f_{1,1}}{f_{1,2}})$$

$X_4$ ne dépend plus de l'entrée y. $X_4$ dépend donc uniquement de la température. On peut ainsi déterminer la température de fonctionnement du système à partir de $X_4$. Connaissant la température, il est facile de déterminer les coefficients de la relation 3 qui sont $X_{0,1}$ et $f_{1,1} + f_{1,2}$. En effet, la loi de variation en température de ces coefficients peut être déterminée en calibration. En connaissant ces coefficients, on est capable de déterminer y à partir de $X_3$.

Dans le cas où le degré de f est supérieur à 1, on considère qu'il existe une loi de variation polynomiale des coefficients $f_{i,1}$ et $f_{i,2}$ en fonction de la température, ce qui est toujours vrai pour des phénomènes physiques. On peut alors écrire les relations 3 et 4 comme étant des polynômes en y et en T, avec des coefficients qui peuvent être déterminés par calibration. A partir des valeurs de $X_3$ et $X_4$, on détermine ainsi y et T.

Ainsi, en utilisant la somme pondérée et la différence pondérée de $X_1$ et $X_2$, on est capable de déterminer l'entrée y et la température. L'utilisation des relations 3 et 4 permet donc de s'affranchir des erreurs dues à la température.

On constate que $X_3$ est nul en l'absence de signal d'entrée. En déterminant y à partir de $X_3$, une erreur au niveau de l'estimation des paramètres du système entraîne une erreur de facteur d'échelle mais pas d'erreur de biais. Cela n'aurait pas été le cas si $X_3$ avait été la simple différence de $X_1$ et $X_2$. On aurait eu alors un biais égal à $X_{0,1} - X_{0,2}$ dans l'expression de la différence : $X_1 - X_2$. L'emploi de la différence pondérée permet d'éliminer cette erreur de biais. L'emploi de la somme pondérée permet de limiter la dépendance de $X_4$ en fonction de y puisqu'il n'existe pas de dépendance linéaire en y. Ainsi, grâce à la somme et à la différence pondérée de $X_1$ et $X_2$, on obtient deux grandeurs variant de manière sensiblement différente suivant la température et le signal à analyser y.

En déterminant y à partir de $X_3$, on s'affranchit du bruit d'horloge. En effet, les instants d'échantillonnage des signaux de sortie des deux systèmes étant identiques, le bruit de l'horloge d'échantillonnage est en mode commun. Le bruit d'horloge n'intervient donc pas directement.

A cause du bruit intervenant au niveau du système S, les signaux X ont une composante de bruit additif que l'on peut noter :

$$X_1 = \hat{X}_1 + b_1$$

$$X_2 = \hat{X}_2 + b_2$$

$\hat{X}_1$ et $\hat{X}_2$ étant les signaux en l'absence de bruit, $b_1$ et $b_2$ étant les bruits.

En utilisant la somme et la différence pondérée de $X_1$ et $X_2$, on obtient un gain de 3 dB en terme de puissance de bruit au niveau de l'estimation de y. En effet, en considérant pour simplifier que f est un polynôme de degré 1, le bruit au niveau de l'estimation de y est :

$$\frac{b_1 - \dfrac{X_{0,1}}{X_{0,2}} b_2}{X_{0,1}(f_{1,1} + f_{1,2})}$$

En considérant que les bruits ont la même puissance sur les deux voies, la densité spectrale de puissance de ce bruit est approximativement : $\dfrac{1}{2f_1^2 X_{0,1}^2} DSP(b_1)$ avec $DSP(b_1)$: Densité Spectrale de Puissance de $b_1$.

La puissance du bruit a donc été divisée par 2 en employant la différence pondérée par rapport à la puissance obtenue en déterminant directement y à partir de $X_1$.

**Revendications**

1. Dispositif de mesure et de traitement de signal comprenant au moins :

   • un premier système recevant un premier signal y et des premiers moyens de traitement délivrant un premier signal de sortie $X_1$, ledit signal de sortie étant de la forme $X_1 = X_{0,1}.f_1(y)$ avec $f_1(y)$ premier polynôme en y de la forme $f_1(y) = 1 + \sum_{i=1}^{N} f_{i,1}.y^i$ ,

   $f_{i,1}$ étant les coefficients connus dudit premier polynôme ;
   • un second système agencé de façon à recevoir un second signal -y sensiblement égal à l'opposé du premier signal et des seconds moyens de traitement délivrant un second signal de sortie $X_2$, ledit signal de sortie étant

   de la forme $X_2 = X_{0,2}.f_2(-y)$ avec $f_2(-y)$ second polynôme en y de la forme $f_2(-y) = 1 + \sum_{i=1}^{N} f_{i,2}.(-y)^i$ ;

   $f_{i,2}$ étant les coefficients connus dudit second polynôme, les coefficients $X_{0,1}$, $X_{0,2}$, $f_{i,1}$ et $f_{i,2}$ variant en fonction de la température ; le premier système et le second système étant analogues de sorte que $X_{0,1}$ et $f_{1,1}$ varient de même manière en fonction de la température que $X_{0,2}$ et $f_{1,2}$ respectivement;
   **caractérisé en ce que** le dispositif de traitement comporte :
   • des troisièmes moyens de traitement aptes à générer deux fonctions appelées respectivement différence

   pondérée $X_3$ et somme pondérée $X_4$, ces fonctions vérifiant $X_3 = X_1 - \dfrac{X_{0,1}}{X_{0,2}} X_2$

   et $X_4 = X_1 + \dfrac{X_{0,1}}{X_{0,2}} \dfrac{f_{1,1}}{f_{1,2}} X_2$ ,

   les rapports $\dfrac{X_{0,1}}{X_{0,2}}$ et $\dfrac{f_{1,1}}{f_{1,2}}$ étant déterminés lors d'une calibration

   • des quatrièmes moyens de traitement aptes à calculer y à partir de la connaissance de la différence pondérée $X_3$ et de la somme pondérée $X_4$.

2. Dispositif de mesure et de traitement selon la revendication 1, caractérisé en en ce que les coefficients $X_{0,1}$, $X_{0,2}$, $f_{i,1}$ et $f_{i,2}$ peuvent se mettre sous la forme d'un polynôme, fonction de la température.

3. Dispositif de mesure et de traitement selon la revendication 2, caractérisé en en ce que, lorsque les signaux de sortie $X_1$ et $X_2$ varient de façon linéaire avec les signaux d'entrée, la valeur de la température.est déterminée par la valeur de la somme pondérée $X_4$ et la valeur du premier signal y par la valeur de la différence pondérée $X_3$.

**Patentansprüche**

1. Vorrichtung zum Messen und Verarbeiten von Signalen, die wenigstens Folgendes umfasst:

   • ein erstes System, das ein erstes Signal y empfängt, und erste Verarbeitungsmittel, die ein erstes Ausgangssignal $X_1$ liefern, wobei das Ausgangssignal die Form $X_1 = X_{0,1}.f_1(y)$ hat, wobei $f_1(y)$ das erste Polynom in y der Form $f_1(y) = 1 + \sum_{i=1}^{N} f_{i,1}.y^i$ ist,

   wobei $f_{i,1}$ die bekannten Koeffizienten des ersten Polynoms sind;
   • ein zweites System, das so ausgelegt ist, dass es ein zweites Signal -y empfängt, das im Wesentlichen gleich der Umkehr des ersten Signals ist, und zweite Verarbeitungsmittel, die ein zweites Ausgangssignal $X_2$ liefern, wobei das Ausgangssignal die Form $X_2 = X_{0,2}.f_2(-y)$ hat, wobei $f_2(-y)$ das zweite Polynom in y der Form

   $$f_2(-y) = 1 + \sum_{i=1}^{N} f_{i,2}.(-y)^i \text{ ist;}$$

   wobei $f_{i,2}$ die bekannten Koeffizienten des zweiten Polynoms sind, wobei die Koeffizienzen $X_{0,1}$, $X_{0,2}$, $f_{i,1}$ und $f_{i,2}$ in Abhängigkeit von der Temperatur variieren; wobei das erste System und das zweite System analog sind, so dass $X_{0,1}$ und $f_{1,1}$ auf dieselbe Weise in Abhängigkeit von der Temperatur variieren wie $X_{0,2}$ bzw. $f_{1,2}$;
   **dadurch gekennzeichnet, dass** die Verarbeitungsvorrichtung Folgendes umfasst:
   • dritte Verarbeitungsmittel zum Erzeugen von zwei Funktionen, jeweils gewichtete Differenz $X_3$ und gewichtete

   Summe $X_4$ genannt, wobei diese Funktionen $X_3 = X_1 - \dfrac{X_{0,1}}{X_{0,2}} X_2$ und $X_4 = X_1 + \dfrac{X_{0,1}}{X_{0,2}} \dfrac{f_{1,1}}{f_{1,2}} X_2$ veri-

   fizieren, wobei die Verhältnisse $\dfrac{X_{0,1}}{X_{0,2}}$ und $\dfrac{f_{1,1}}{f_{1,2}}$ bei einer Kalibration bestimmt werden,

   • vierte Verarbeitungsmittel zum Berechnen von y auf der Basis der Kenntnis der gewichteten Differenz $X_3$ und der gewichteten Summe $X_4$.

2. Vorrichtung zum Messen und Verarbeiten nach Anspruch 1, **dadurch gekennzeichnet, dass** die Koeffizienten $X_{0,1}$, $X_{0,2}$, $f_{i,1}$ und $f_{i,2}$ in Form eines Polynoms in Abhängigkeit von der Temperatur vorliegen können.

3. Vorrichtung zum Messen und Verarbeiten nach Anspruch 2, **dadurch gekennzeichnet, dass**, wenn die Ausgangssignale $X_1$ und $X_2$ auf lineare Weise mit den Eingangssignalen variieren, der Wert der Temperatur anhand des Wertes der gewichteten Summe $X_4$ und der Wert des ersten Signals y anhand des Wertes der gewichteten Differenz $X_3$ bestimmt werden.

**Claims**

1. A device for measuring and processing signals, comprising at least:

   • a first system receiving a first signal y and first processing means delivering a first output signal $X_1$, said output signal being of the form $X_1 = X_{0,1}.f_1(y)$, with $f_1(y)$ being a first polynomial in y of the form

   $$f_1(y) = 1 + \sum_{i=1}^{N} f_{i,1}.y^i \text{ ,}$$

   with $f_{i,1}$ being the known coefficients of said first polynomial;
   • a second system arranged to receive a second signal -y substantially equal to the opposite of said first signal and second processing means delivering a second output signal $X_2$, said output signal being of the form $X_2 =$

   $X_{0,2}.f_2(y)$, with $f_2(-y)$ being a second polynomial in y of the form $f_2(-y) = 1 + \sum_{i=1}^{N} f_{i,2}.(-y)^i$ ;

with $f_{i,2}$ being the known coefficients of said second polynomial, the coefficients $X_{0,1}$, $X_{0,2}$, $f_{i,1}$ and $f_{i,2}$ varying as a function of the temperature; said first system and said second system being similar such that $X_{0,1}$ and $f_{1,1}$ vary in the same way, as a function of the temperature, as $X_{0,2}$ and $f_{1,2}$, respectively,

**characterised in that** said processing device comprises:

• third processing means designed to generate two functions referred to as weighted difference $X_3$ and weighted sum $X_4$, respectively, said functions verifying $X_3 = X_1 - \dfrac{X_{0,1}}{X_{0,2}} X_2$ and $X_4 = X_1 + \dfrac{X_{0,1}}{X_{0,2}} \dfrac{f_{1,1}}{f_{1,2}} X_2$, with the ratios $\dfrac{X_{0,1}}{X_{0,2}}$ and $\dfrac{f_{1,1}}{f_{1,2}}$ being determined during a calibration;

• fourth processing means designed to calculate y on the basis of the knowledge of the weighted difference $X_3$ and of the weighted sum $X_4$.

2. The measuring and processing device according to claim 1, **characterised in that** the coefficients $X_{0,1}$, $X_{0,2}$, $f_{i,1}$ and $f_{i,2}$ can assume the form of a polynomial as a function of the temperature.

3. The measuring and processing device according to claim 2, **characterised in that**, when the output signals $X_1$ and $X_2$ vary in a linear manner with the input signals, the value of the temperature is determined by the value of the weighted sum $X_4$ and the value of the first signal y is determined by the value of the weighted difference $X_3$.

FIG. 1

FIG. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P.P.L. REGTIEN et al.** Measurement Science for Engineers. Butterworth-Heinemann, 2004